# EUROPÄISCHE PATENTSCHRIFT

(11) **EP 1 097 795 B1**
(45) Veröffentlichungstag und Bekanntmachung des Hinweises auf die Patenterteilung: **07.01.2004**
(21) Anmeldenummer: 00123652.0
(22) Anmeldetag: 30.10.2000
(51) Int. Cl.: B29C 55/04, B29D 31/00

(54) **Verfahren und Vorrichtung zur kontinuierlichen Herstellung von Platten aus in Dickenrichtung verstreckten Thermoplasten**
Method and apparatus for the continuous manufacturing of thermoplastic plates stretched in thickness direction
Procédé et dispositif pour la fabrication en continu de plaques thermoplastiques étirées dans la direction de l'épaisseur

(30) Priorität: 23.12.1999 DE 19962781; 19.06.2000 DE 10030616; 08.11.1999 US 436273
(43) Veröffentlichungstag der Anmeldung: 09.05.2001
(73) Patentinhaber: Blizzard Holding GmbH, 5730 Mittersill (AT)
(72) Erfinder: Viehhauser, Christian, 5700 Zell am See (AT)
(74) Vertreter: Laufhütte, Dieter, Dr.-Ing.

(56) Entgegenhaltungen:
- US-A- 3 919 378

## Beschreibung

Die Erfindung betrifft ein Verfahren sowie eine Vorrichtung zur Herstellung von in Dickenrichtung verstreckten thermoplastischen Platten, bei denen im Vergleich zum bisherigen Stand der Technik wesentlich weniger Energieaufwand notwendig ist und kürzere Herstellzyklen erreicht werden.

Bei den in den Patentschriften
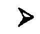 US Patent Nr. 4,113,909 (Beasley) vom 12. September 1978
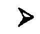 US Patent Nr. 4,164,389 (Beasley) vom 14. August 1979
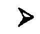 US Patent Nr. 4,315,051 (Rourke) vom 9. Februar 1982
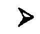 US Patent Nr. 4,269,586 (Ronayne) vom 26. Mai 1981
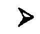 US Patent Nr. 4,264,293 (Rourke) vom 28. April 1981
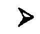 US Patent Nr. 4,315,050 (Rourke) vom 9. Februar 1982
beschriebenen Verfahren werden jeweils die für das Verstrecken der thermoplastischen Platten notwendigen Formplatten an der Unter- bzw. Oberseite einer heizund kühlbaren Ziehpresse angebracht.

Die thermoplastischen Platten werden zwischen den oberen und unteren, mit bestimmten Strukturen perforierten, Formplatten soweit erhitzt, dass Haftung zu den Formplatten erreicht wird und der Kunststoff beim nachfolgenden Ziehvorgang quer zur Dickenrichtung verstreckt werden kann.

Üblicherweise haben die am Pressenober- und -unterteil angebrachten Formplatten unterschiedlichste Perforierungen. Auf diese Weise haftet das thermoplastische Material an den nicht perforierten Bereichen dieser Formplatten, sodass dann beim nachfolgenden Trennen der Formplatten von der verstreckten Platte in den Bereichen der Perforierungen Hohlräume auftreten. Über die Vorwahl der Perforierung ist es möglich, die Größe und Form der Hohlräume in der verstreckten thermoplastischen Platte zu definieren.

Das Hauptproblem bei den in den oben angeführten Patenten erwähnten Herstellverfahren ist, dass das Bedienungspersonal an den Pressen zirka 15 bis 20 Minuten warten muss, bis nach dem Verstreckungsvorgang das in Dickenrichtung verstreckte thermoplastische Material soweit abgekühlt ist, dass es von den Formplatten getrennt werden kann. Dies deshalb, weil über die gleiche Presse sowohl gekühlt als auch geheizt werden muss.

Dadurch ergeben sich hohe Produktionskosten bei geringen Fertigungszyklen und einem hohen Energieaufwand. Ein weiterer Nachteil dieser Verfahren besteht darin, dass der Einsatz unterschiedlich perforierter Formplatten jeweils einen komplizierten Ein- und Ausbau notwendig macht, da die Formplatten jeweils mit dem Pressenober- und -unterteil verbunden werden müssen.

Dieser Vorgang ist äußerst zeitaufwendig und kompliziert, da das Bedienungspersonal nicht nur abwarten muss, bis die Formplatten soweit abgekühlt sind, dass ohne Gefahr daran hantiert werden kann, sondern auch die Temperatur am Pressenober- und -unterteil soweit reduziert wurde, dass eine gefahrlose Montage der Formplatten zum Pressenober- und -unterteil möglich ist.

Ein weiterer Nachteil dieser Verfahren ist ihr großer Wärmeverlust. Jedes thermoplastische Plattenmaterial, das verstreckt wird, wird in der Presse zwischen den Formplatten von Raumtemperatur auf die Temperatur des Ziehvorgangs, bei der das Material an den Formplatten anklebt, gebracht. Dadurch wird zusätzliche Zeit benötigt, weil das thermoplastische Plattenmaterial nicht vorgeheizt zwischen die Formplatten platziert werden kann. Dadurch erhöhen sich auch die Produktionskosten stark, weil der Wärmeverlust dieses Prozesses sehr hoch ist.

Jedes neue thermoplastische Ausgangsplattenmaterial muss durch Zuführung neuer Energie erwärmt werden. Dies aufgrund der Tatsache, weil die Ziehpresse am Beginn des Ziehvorganges bzw. zum Einlegen der thermoplastischen Platte wieder vollständig auf Raumtemperatur zurückgekühlt werden muss.

Darüber hinaus besteht ein weiterer Nachteil dieser Verfahren in der Tatsache, dass die Fertigungsvorgänge weder automatisiert noch kontinuierlich sind und üblicherweise einen hohen Personalaufwand benötigen.

Die Patentschrift US-A-3 919 378 offenbart ein weiteres Gattungsgemäßes Verfahren und eine entsprechende Vorrichtung, von denen sich der Gegenstand der Ansprüche 1 und 17 dadurch unterscheidet, dass die Herzstation und die Ziehstation getrennt sind.

Aufgabe der Erfindung ist es, ausgehend von diesem gattungsbildenden Stand der Technik das Verfahren effizienter auszubilden sowie eine verbesserte Vorrichtung zur effizienteren Herstellung solcher verstreckten Platten zu schaffen.

In verfahrenstechnischer Hinsicht wird diese Aufgabe durch ein Verfahren gemäß Patentanspruch 1 gelöst. In vorrichtungstechnischer Hinsicht wird die genannte Aufgabe erfindungsgemäß durch eine Vorrichtung gemäß Patentanspruch 17 gelöst. Bevorzugte Ausführungsformen der Erfindung sind Gegenstand der Unteransprüche.

Das im Rahmen der gegenständlichen Erfindung beschriebene Verfahren zur kontinuierlichen Herstellung von in Dickenrichtung verstreckten thermoplastischen Platten weist gegenüber dem Stand der Technik einen wesentlichen Vorteil in Bezug auf den Energieverbrauch und die Herstellzyklen auf.

Um einen kontinuierlichen Prozeß zu ermöglichen, wird das thermoplastische Plattenmaterial in einer Zusammenbaustation zwischen einer oberen und unteren Formplatte eingelegt.

Danach wird dieses Ziehpaket in eine Heizstation transportiert und dort soweit erwärmt, dass das thermoplastische Plattenmaterial an den nicht perforierten Bereichen der Formplatten anklebt.

Im Anschluß wird dieses Ziehpaket in eine Zieh- und/oder Kühlpresse weitertransportiert, in der die oberen und unteren Formplatten mit dem Pressenober- und - unterteil verbunden werden, der Verstreckungsvorgang der thermoplastischen Platten quer zur Dickenrichtung erfolgt und anschließend das Ziehpaket wieder soweit abgekühlt wird, dass danach ein problemloses Entformen der Formplatten vom verstreckten Kern erfolgen und der Rücktransport zur Zusammenbaustation erfolgen kann.

Die vorliegende Erfindung wird anschließend anhand in der Zeichnung dargestellter Ausführungsbeispiele näher erläutert. In den Zeichnungen zeigen:

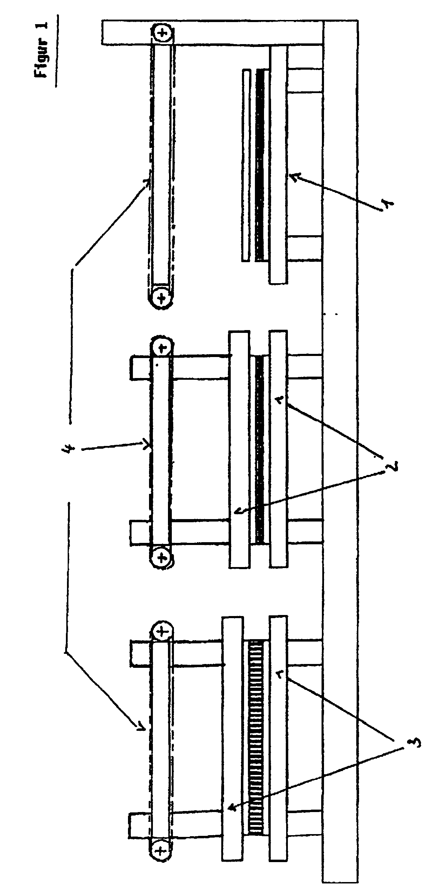

- Fig. 1: das Prinzip einer gesamten Anlage gemäß einer bevorzugten Ausführung der Erfindung mit einer Entform- und Zusammenbaustation, einer Heizpresse, einer Zieh- und Kühlpresse sowie einer Transport-Einheit.

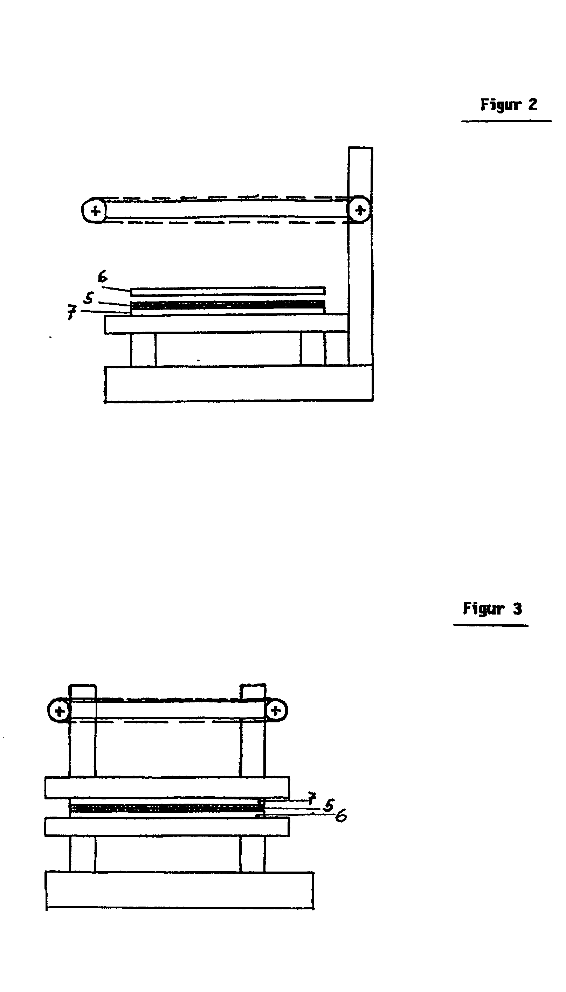

- Fig. 2: einen Schnitt durch die Zusammenbaustation, in der eine thermoplastische Kunststoffplatte zwischen einer unteren und einer oberen perforierten oder nicht perforierten Formplatte platziert wird.
- Fig. 3: einen Schnitt durch die Heizpresse, in der thermoplastische Kunststoffplatten zwischen den Formplatten so hoch erwärmt werden, dass das Material über adhäsive Kräfte eine Haftung zu den Formplatten erreicht.
- Fig. 4: einen Schnitt durch die Zieh- und Kühlpresse, in der die Formplatten mittels eines Vakuum- oder Magnetsystems oder mittels mechanischer Spannvorrichtung am Pressenoberteil bzw. - unterteil fixiert und danach wird der zwischen den oberen und unteren Formplatten befindliche thermoplastische Werkstoff in Dickenrichtung verstreckt werden, Unmittelbar danach wird die Presse soweit abgekühlt, dass der thermoplastische Werkstoff 5 zwischen den perforierten Formplatten 6,7 genügend Stabilität für die Entformung von den oberen 6 und unteren 7 Formplatten aufweist.
- Fig. 5: den Entformvorgang in der Entform- und Zusammenbaustation 1, in der die oberen 6 und unteren 7 Formplatten von der verstreckten Kunststoffplatten 5 abgetrennt werden.
- Fig. 6: eine schematische Seitenansicht einer Fertigungsanlage zur Herstellung verstreckter Thermoplastplatten gemäß einer weiteren Ausführung der Erfindung,

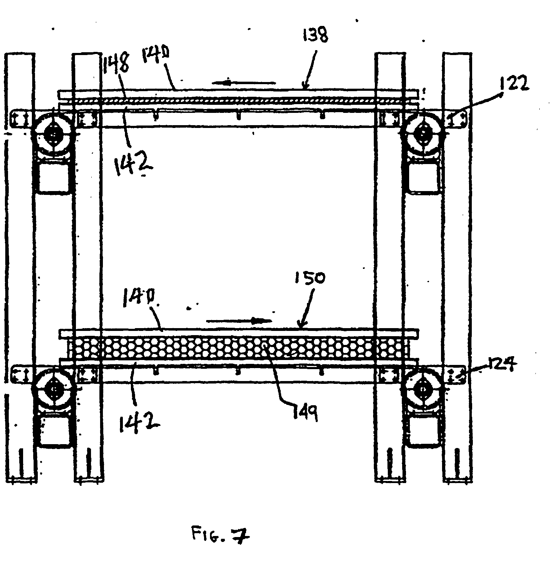

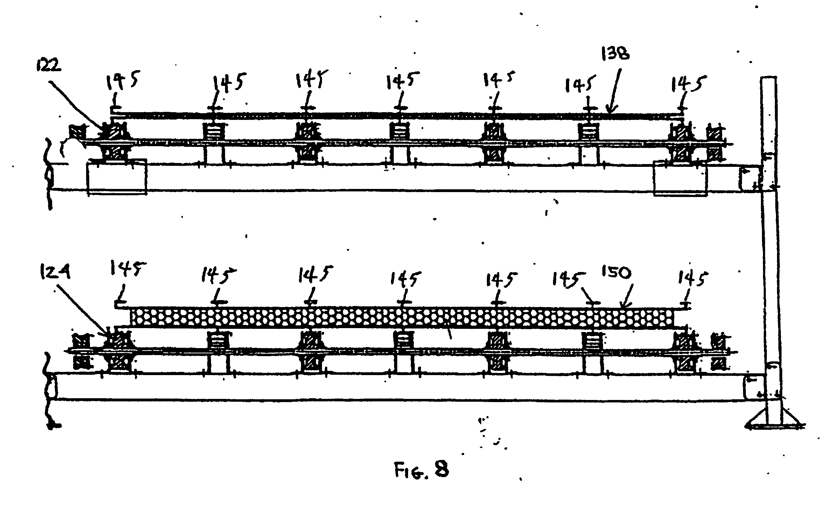

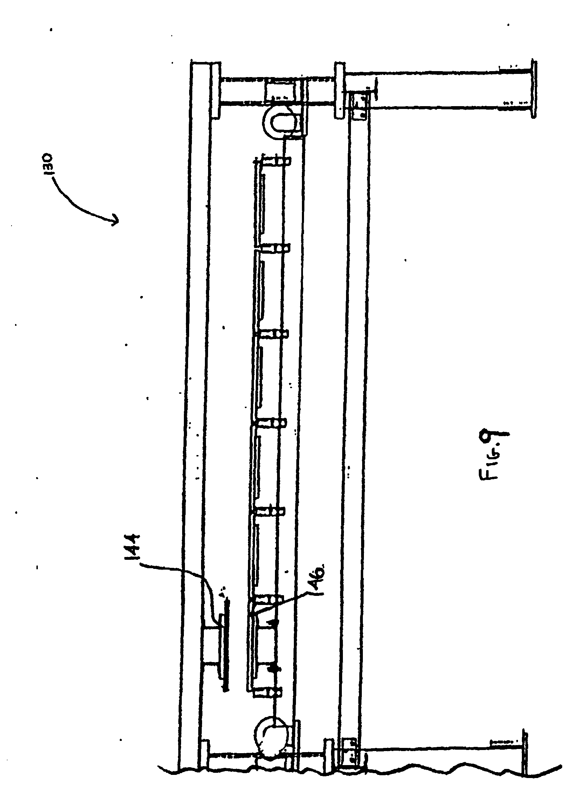

- Fig. 7: einen Schnitt durch die Heizstation entlang den Linien 2-2 in Fig. 1, wobei auf einer oberen Transportbahn ein noch nicht verstrecktes Ziehpaket zur Ziehpresse gefördert und auf einer unteren Transportpresse ein bereits verstrecktes Ziehpaket zurückgefördert wird,

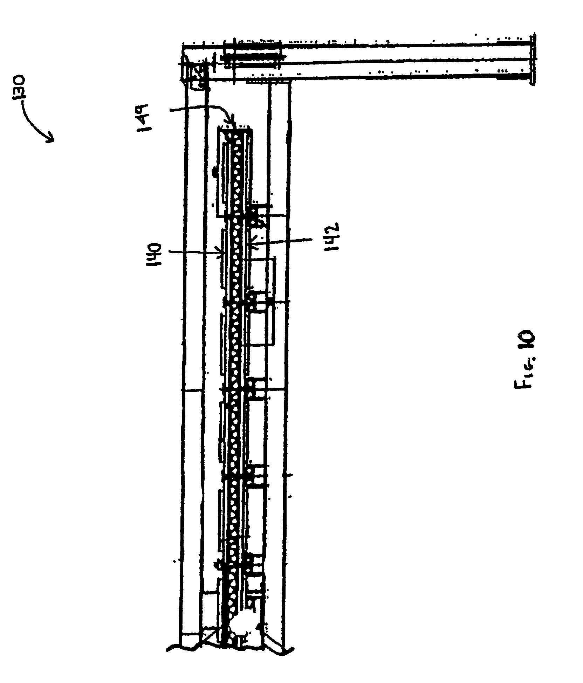

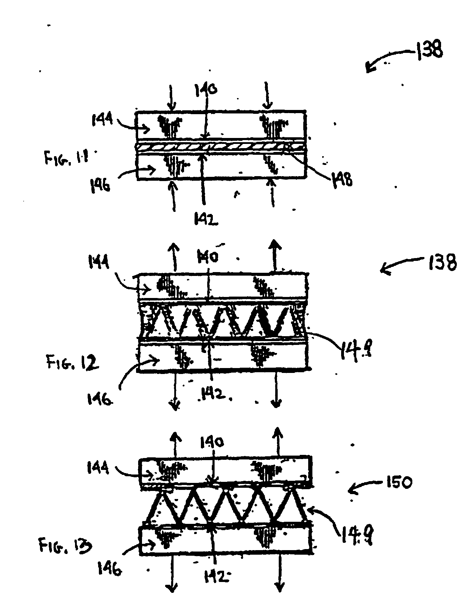

- Fig. 8: einen Schnitt durch die Heizststation quer zu dem Schnitt aus Fig. 6,

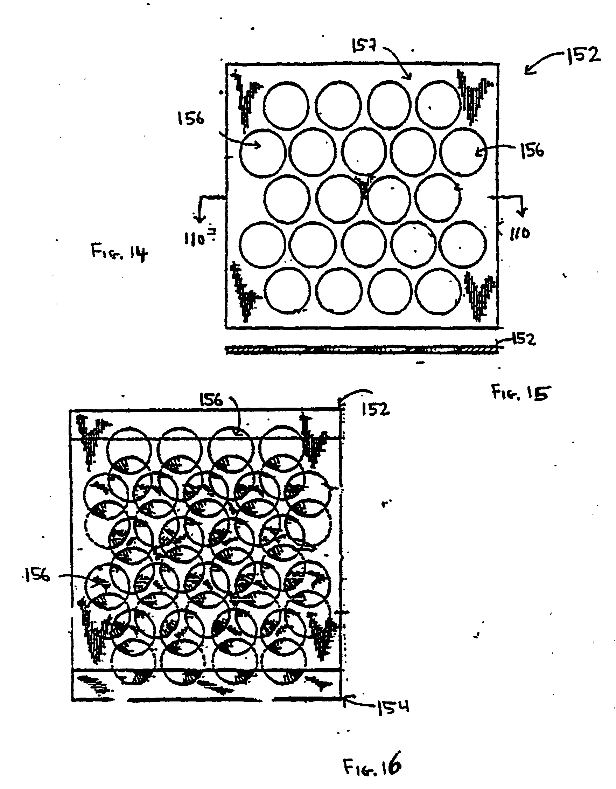

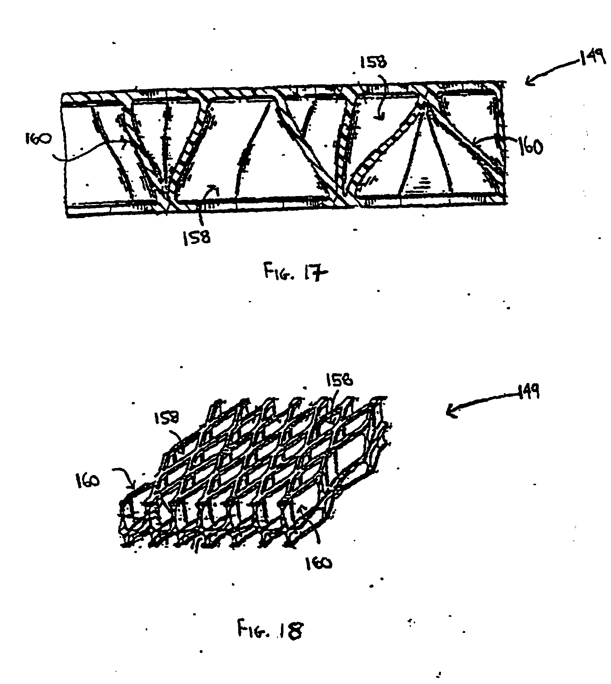

- Fig. 9: einen Schnitt durch die Ziehpresse entlang der Linie 4-4 in Fig. 5, wobei kein Ziehpaket in der Ziehpresse liegt,
- Fig. 10: eine Schnittansicht ähnlich Fig. 8, wobei ein Ziehpaket nach der Verstreckung des thermoplastischen Plattenmaterials dargestellt ist,
- Fig. 11: eine schematische Darstellung eines Ziehpakets in einer Schnittansicht vor der Verstreckung,
- Fig. 12: eine schematische Darstellung eines Ziehpaketes ähnlich Fig. 10, wobei die Anordnung während des Verstreckvorganges dargestellt ist,
- Fig. 13: eine schematische Darstellung eines Ziehpaketes ähnlich den Figuren 10 und 11, wobei das Ziehpaket nach derVerstreckung dargestellt ist,
- Fig. 14: eine Draufsicht auf eine perforierte Formplatte,
- Fig. 15: eine Schnittansicht der perforierten Formplatte entlang der Linie 110-110 in Fig. 13,
- Fig. 16: eine Ansicht zweiter übereinander liegender Formplatten mit zueinander versetzten Perforierungen, die bei der Verstreckung eine honigwabenartige Struktur des thermoplastischen Plattenmaterials erzeugen,
- Fig. 17: eine Schnittansicht durch ein in Dickenrichtung verstrecktes Plattenmaterial, das nach dem Verfahren der vorliegenden Erfindung hergestellt wurde,
- Fig. 18: eine perspektivische Ansicht eines Plattenmateriales, welches nach dem vorliegenden Verfahren hergestellt wurde,
- Fig. 19: eine Schnittansicht durch ein in Dickenrichtung verstrecktes thermoplastisches Plattenmaterial, welches nach dem vorliegenden Verfahren verstreckt wurde, und
- Fig. 20: eine Schnittansicht eines in Dickenrichtung verstreckten thermoplastischen Plattenmaterials, welches nach dem vorliegenden Verfahren hergestellt wurde.

In einer Zusammenbaustation 1 werden thermoplastische Kunststoffplatten 5 zwischen einer unteren 6 und oberen 7, beliebig perforierten oder gänzlich nicht perforierten Formplatte platziert.

Danach wird dieses Ziehpaket in eine Heizpresse 2 transportiert, in der die thermoplastische Kunststoffplatte 5 zwischen den Formplatten 6,7 soweit erwärmt wird, dass über adhäsive Kräfte eine Haftung zu den nicht perforierten Bereichen der Formplatten 6, 7 erreicht wird.

Von dort geht dann das erwärmte Ziehpaket in die Zieh- und Kühlpresse 3. In der Zieh- und Kühlpresse 3 werden die Formplatten 6,7 mittels eines Vakuum- oder Magnetsystems oder einer mechanischen Fixierung am Pressenoberteil 10 bzw. - unterteil 11 fixiert und danach wird der zwischen den oberen 6 und unteren Formplatten 7 befindliche thermoplastische Werkstoff 5 in Dickenrichtung verstreckt. Unmittelbar danach wird die Presse soweit abgekühlt, dass der thermoplastische Werkstoff 5 zwischen den Formplatten 6,7 genügend Stabilität für die Entformung von den oberen 6 und unteren 7 Formplatten aufweist.

Von dort geht dann das Ziehpaket über die Transporteinheit 4 zurück zur Entformund Zusammenbaustation 1.

Auf diese Weise kommt es im Vergleich zu den bisher in den einzelnen Patenten beschriebenen Verfahren zu einem wesentlich geringeren Energieverbrauch mit wesentlich kürzeren Herstellzyklen.

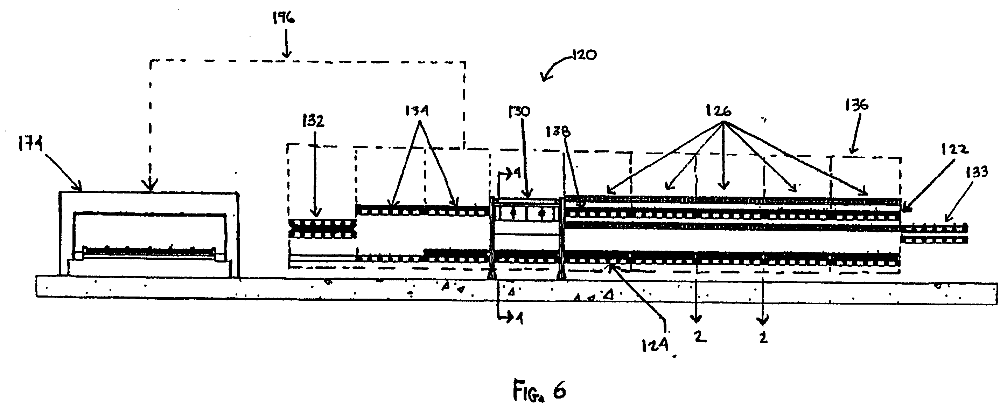

Die kontinuierlich arbeitende Vorrichtung 120 gemäß Fig. 6 besitzt übereinander angeordnet eine erste Fördereinrichtung 122 und eine zweite Fördereinrichtung 124, die gemeinsam in einem Gehäuse 136 angeordnet sind. Entlang der ersten Fördereinrichtung 122 sind eine Vielzahl von Wärmequellen 126, eine beheizbare Ziehpresse 130 sowie eine Mehrzahl von Kühleinrichtungen 134 angeordnet. Ein Ziehpaket 138 besteht aus einer ersten Formplatte 140, einer zweiten Formplatte 142 sowie einer zwischen diesen angeordneten Platte 148 aus thermoplastischem Kunststoff. Das Ziehpaket 138 wird von der ersten Fördereinrichtung 122 durch die Hitzezonen der Heizeinrichtungen 126 bewegt. Vorzugsweise bestehen die beiden Formplatten 140 und 142 aus Aluminium und besitzen eine Dicke von etwa 3-4mm.

Auf dem Weg durch die Heizstation mit den Heizquellen 126 wird die thermoplastische Platte 148 derart aufgeheizt, daß sie an den Oberflächen der beiden Formplatten 140 und 142 anklebt.

In der Ziehpresse 130 sind eine obere Pressenplatte 144 sowie eine untere Pressenplatte 146 vorgesehen, zwischen die die Ziehpakete 138 geschoben werden. Hierbei werden die beiden Formplatten 140 und 144 des Ziehpaketes mittels Verbindungsmitteln 145 an den beiden Pressenplatten 144 und 146 befestigt. Die Befestigungsmittel 145 sind derart ausgebildet, daß die Formplatten 140 und 144 formschlüssig eingeschoben werden können. Die obere sowie die untere Pressenplatte 144 und 146 sind mittels vorzugsweise elektrisch ausgebildeter Heizeinrichtungen beheizbar, die jeder der beiden Pressenplatten zugeordnet, insbesondere in diese integriert sind. Das Ziehpaket wird über die beiden Pressenplatten 144 und 146 auf eine Temperatur im Bereich zwischen 50°C und 300°C, vorzugsweise zwischen 100°C und 250°C aufgeheizt. Nach Erreichen der Verstrecktemperatur werden die beiden Pressenplatten 144 und 146 auseinandergefahren, um die beiden Formplatten 140 und 142 auseinander zu ziehen und damit das dazwischenliegende thermoplastische Plattenmaterial in Dickenrichtung zu verstrecken.

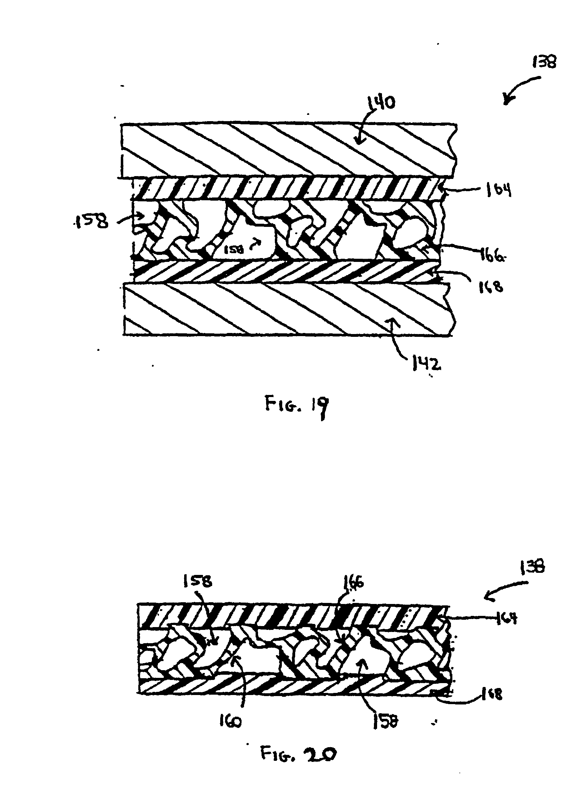

Die Figuren 10 bis 12 zeigen schematisch den Ablauf des Verstreckvorganges, bei dem die thermoplastische Platte in Dickenrichtung auseinandergezogen und aufgerissen wird, so daß sich die gewünschte zellenförmige Struktur mit schräg verlaufenden Zellwänden ergibt.

Bereits vor der Aufgabe auf die erste Fördereinrichtung 122 wird das Ziehpaket 138 in einer Zusammenbaustation zusammengefügt. Die beiden Formplatten 140 und 142 liegen lediglich lose, d.h. ohne Vorspannung auf dem zu verstreckenden thermoplastischen Material, bis das thermoplastische Material auf eine Temperatur aufgeheizt ist, bei der es mit den Formplatten verklebt. Danach verbleiben die Formplatten während des gesamten Prozesses mit dem zu verstreckenden thermoplastischen Plattenmaterial verklebt bzw. verbunden, bis die Abkühlung des Ziehpaketes 138 auf die Entformtemperatur im Bereich von etwa 10°C bis 30°C erfolgt. Bei Abkühlung auf diese Temperatur lassen sich die beiden Formplatten 140 und 142 leicht von dem dann bereits verstreckten Kunststoff lösen. Durch die gesamte Anlage werden eine Vielzahl von Ziehpaketen 138 gleichzeitig bewegt. Jedes der Ziehpakete 138 besitzt seine eigenen Formplatten 140 bzw. 142, wodurch Wartezeiten aufgrund des Abkühlprozesses vermieden werden. Die verstreckten Ziehpakete können heiß aus der Ziehpresse entfernt werden, so daß ohne Abwarten der Abkühlzeit unmittelbar anschließend das nächste Ziehpaket in die Ziehpresse gegeben werden kann. Auf diese Weise kann etwa alle 1-2 Minuten eine thermoplastische Platte verstreckt werden. Dies bedeutet eine beträchtliche Zeitersparnis, da nach der herkömmlichen Methode die Taktzeit der Verstreckanlagen 15-20 Minuten betrug.

Die beiden Formplatten 140 und 142 können jeweils eine perforierte Oberfläche 152 bzw. 154 besitzen, die jeweils der zu verstreckenden themoplastischen Platte gegenüber liegen. Die Figuren 14 bis 16 zeigen die perforierten Oberflächen 152 sowie 154 mit jeweils einer Vielzahl von Ausnehmungen 156, die zueinander versetzt angeordnet sind, wenn die beiden Formplatten 140 und 142 aufeinander bzw. auf dem dazwischenliegenden thermoplastischen Plattenmaterial liegen.

Bei der Aufheizung bzw. beim Verstrecken haftet das thermoplastische Material 148 nur an den nicht perforierten Bereichen der perforierten Oberflächen 152 und 154. Hierdurch bilden sich beim Verstrecken eine Vielzahl von Zellen 158 in dem thermoplastischen Plattenmaterial, wie dies in den Figuren 17 bis 20 dargestellt ist, entsprechend den Ausnehmungen 156 in den perforierten Oberflächen 152 und 154. Eine Vielzahl von Rippen 160 werden in dem thermoplastischen Plattenmaterial an den Stellen ausgebildet, an denen die Oberflächen der Formplatten 140 und 142 keine Ausnehmungen besitzen. Die nicht perforierten Bereiche sind mit der Bezugsziffer 157 gekennzeichnet.

Um einen Druckausgleich in den sich bildenden Zellen 158 herbeizuführen, können letztere während der Verstreckung durch die beiden Formplatten 140 und 142 belüftet werden. Dies hilft, die Struktur und die Unversehrtheit der Zellen 158 im Querschnitt der verstreckten Kunststoffplatte zu erhalten.

In vorteilhafter Weise können die beiden Formplatten 140 bzw. 142 eine unterschiedliche Anzahl und/oder eine unterschiedliche Anordnung von Perforierungen bzw. Ausnehmungen 156 besitzen, um eine gewünschte Zellenstruktur zu erhalten. Die nacheinander folgenden Ziehpakete 138 können auch mit Formplatten bestückt sein, die eine unterschiedliche Anzahl und/oder eine unterschiedliche Anordnung der Perforationen bzw. Ausnehmungen aufweisen, um verschiedene Zellstrukturen zu erzielen. Die Ausnehmungen 156 selbst können ebenfalls verschiedene Geometrien aufweisen, wie z.B. abgewinkelte oder geradlinig verlaufende Flanken. Durch die Verarbeitung der thermoplastischen Platten in Ziehpaketen mit jeweils fest zugeordneten Formplatten können ohne lästige Umrüstzeiten eine Vielzahl von Plattengeometrien bzw. Zellstrukturen erhalten werden.

Die Figuren 17-20 zeigen unterschiedliche Querschnitts- und Zellstrukturen, die nach dem vorliegenden Verfahren erhältlich sind. Die Figuren 19 und 20 zeigen dabei einen verstrecken Plattenkorpus aus thermoplastischem Kunststoff, der einen mehrschichtigen Aufbau besitzt. Zwischen außen liegenden Schichten 164 und 168 ist jeweils eine in Dickenrichtung verstreckte thermoplastische Schicht 166 angeordnet.

Nach der Verstreckung werden die verstreckten Ziehpakete 150 aus der Ziehpresse 130 entfernt und durch die Kühlstation 134 transportiert, in der die Ziehpakete bzw. das verstreckte themoplastische Material 149 auf Raumtemperatur abgekühlt werden. Die Kühlstation 134 kühlt den verstreckten thermoplastischen Kunststoff vorzugsweise mittels Kaltluft. Mittels einer Hebevorrichtung 132 werden die verstreckten Ziehpakete 150 von der ersten Fördereinrichtung 122 auf die zweite Fördereinrichtung 124 abgesenkt. Letztere fördert die verstreckten Ziehpakete erneut durch die Kühlstation und sodann zu einer zweiten Hebevorrichtung 133, die die verstreckten Ziehpakete 150 zu einer Entnahmestation fördert, in der die Ziehpakete entfernt bzw. entformt werden können.

Um Energie zu sparen und günstig zu wirtschaften, umschließt das Gehäuse 36 alle energierelevanten Komponenten der Anlage 120. Die Ziehpakete 138 werden an einem Ende des Gehäuses 136 auf die erste Fördereinrichtung 122 gegeben. Die fertig verstreckten Ziehpakete 150 kommen mittels der zweiten Hebevorrichtung 133 an demselben Ende wieder heraus. Der gesamte Prozeß ist automatisiert, so daß lediglich die vorbereiteten Ziehpakete 138 auf die erste Fördereinrichtung 122 zu geben sind und auf die fertig verstreckten Ziehpakete 150 zu warten ist.

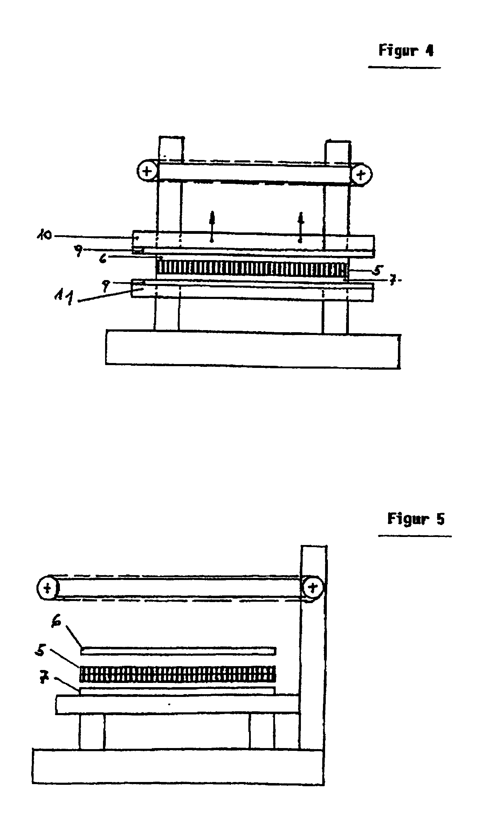

Das Gehäuse 136 ist durch Isoliermaterial wie z.B. Polyurethan wärmeisoliert, um zu verhindern, daß Wärme sich aus der Heizstation 126 verflüchtigt. Die Wärme, mit der ein Ziehpaket 136 beaufschlagt wird, wird sozusagen recycelt und nochmals für das nächste folgende Ziehpaket verwendet. Zusätzlich wird Wärme, die von den fertig verstreckten Ziehpaketen 150 in der Kühlstation 134 abgegeben wird, zu der Heizstation 126 geführt, in der dann die entsprechende Wärmeenergie zur Aufheizung der nächsten Ziehpakete verwendet wird. Die in der Kühlstation 134 eingefangene Wärme kann auch mittels Leitungen 176 zu einem Trockner 174 geführt werden (vgl. Fig. 5), um in dem Trockner 174 Feuchtigkeit von dem thermoplastischen Plattenmaterial 148 zu entfernen, bevor dieses auf die erste Fördereinrichtung 122 gegeben wird. Durch die Wärmespeicherung bzw. Weiter- und rückführung kann die benötigte Energie um bis zu 80% im Vergleich zu den bisherigen Verfahren reduziert werden.

## Patentansprüche

1. Verfahren zur kontinuierlichen Herstellung von Platten aus in Dickenrichtung verstreckten Thermoplasten, wobei mindestens ein Ziehpaket bestehend aus einer oberen und unteren Formplatte (6, 7; 140, 142) und einer dazwischen liegenden Platte (5; 148) aus einem thermoplastischen Kunststoff in einer eigenen Heizstation (2; 126) soweit erwärmt wird, dass das thermoplastische Plattenmaterial an den Formplatten haftet, anschließend in einer eigenen Ziehstation (3; 130) verstreckt und sodann bis auf die Entformtemperatur der Formplatten vom verstreckten Plattenmaterial abgekühlt wird.

2. Verfahren nach Anspruch 1, wobei die Fixierung der oberen und unteren Formplatten (6, 7; 140, 142) am Pressenober- und -unterteil einer Ziehpresse (3; 130) in der Ziehstation (3; 130) mittels mechanischer, pneumatischer und/oder magnetischer Vorrichtungen (135) erfolgt.

3. Verfahren nach Anspruch 1 oder 2, wobei das Ziehpaket in der Heizstation auf eine Temperatur in etwa zwischen 50 und 300° C, vorzugsweise 100°C bis 250°C erwärmt wird.

4. Verfahren nach einem der Ansprüche 1 bis 3, wobei in der Ziehstation die an dem Pressenober- und -unterteil fixierten Formplatten (6, 7; 140, 142) in Dikkenrichtung bewegt werden, so daß dadurch das thermoplastische Plattenmaterial zwischen den Formplatten (5; 138) in Dickenrichtung verstreckt wird.

5. Verfahren nach einem der Ansprüche 1 bis 4, wobei das expandierte Plattenmaterial auf eine Temperatur zwischen 10 und 30° C herunter gekühlt wird.

6. Verfahren nach einem der Ansprüche 1 bis 5, wobei das expandierte Plattenmaterial in der Ziehstation (3) herunter gekühlt wird.

7. Verfahren nach einem der Ansprüche 1 bis 6, wobei das Kühlen der Formplatten bzw. der Ziehpakete in einer eigenen Kühlstation (134) erfolgt.

8. Verfahren nach einem der Ansprüche 1 bis 7, wobei über die Größe und Gestalt von Perforierungen (156) der oberen und/oder unteren Formplatte (140, 142) die Zellstruktur der verstreckten thermoplastischen Platte erzielt wird.

9. Verfahren nach einem der Ansprüche 1 bis 8, wobei auf einer Seite eine nicht perforierte Formplatte eingesetzt wird und dadurch eine einseitig geschlossene Oberfläche an der verstreckten thermoplastischen Platte gezogen wird.

10. Verfahren nach einem der Ansprüche 1 bis 9, wobei Formplatten (6, 7; 140, 142) aus Aluminium oder Stahl verwendet werden.

11. Verfahren nach einem der Ansprüche 1 bis 10, wobei die thermoplastische Platte mit Formplatten von ca. 3 bis 30 mm Dicke zu dem Ziehpaket geformt werden.

12. Verfahren nach einem der vorhergehenden Ansprüche, wobei das Ziehpaket vor der Erwärmung in der Heizstation (2; 126) in einer eigenen Zusammenbaustation zusammengefügt wird.

13. Verfahren nach einem der vorhergehenden Ansprüche, wobei die thermoplastische Platte in der Ziehstation (3; 130) derart verstreckt wird, daß eine Vielzahl von Zellen, die durch Zellwände voneinander getrennt sind, ausgebildet werden, wobei vorzugsweise die Zellen belüftet werden, um den Druck in den Zellen auszugleichen.

14. Verfahren nach einem der vorhergehenden Ansprüche, wobei das Ziehpaket in der Heizstation (2; 126) für etwa 30 bis 60 Sekunden, vorzugsweise etwa 40 Sekunden erwärmt wird.

15. Verfahren nach einem der vorhergehenden Ansprüche, wobei eine Wärmespeicherung in der Heizstation (126) und/oder ein Wärmetransfer von der Kühlstation (134) und/oder der Ziehstation (130) zur Heizstation (126) bewerkstelligt wird.

16. Verfahren nach einem der vorhergehenden Ansprüche, wobei das zumindest eine Ziehpaket quasi kontinuierlich von Station zu Station bewegt wird, insbesondere eine Mehrzahl von Ziehpaketen nacheinander von Station zu Station bewegt werden.

17. Vorrichtung zur kontinuierlichen Herstellung von Platten aus in Dickenrichtung verstreckten Thermoplasten, mit einer Heizstation (2; 126) zur Erwärmung zumindest eines Ziehpaketes bestehend aus einer oberen und unteren Formplatte (6, 7; 140, 142) und einer dazwischen liegenden Platte (5; 148) aus einem thermoplastischen Kunststoff auf eine Temperatur, daß das thermoplastische Plattenmaterial an den Formplatten haftet, einer Ziehstation (3; 130) zum Auseinanderziehen der Formplatten und Verstrecken des thermoplastischen Plattenmaterials, einer Kühlstation (3; 134) zum Abkühlen des zumindest einen Ziehpaketes auf eine Entformungstemperatur, und einer Fördereinrichtung (122, 124) zum automatischen Transport des zumindest einen Ziehpakets von der Heizstation zur Ziehstation und zur Kühlstation.

18. Vorrichtung nach dem vorhergehenden Anspruch 17, wobei die Ziehstation eine Ziehpresse (3; 130) mit lösbaren Verbindungsmitteln (145) zur lösbaren Befestigung der Formplatten (6, 7; 140, 142) der Ziehpakete aufweist, wobei vorzugsweise die lösbaren Verbindungsmittel mechanisch, pneumatisch, hydraulisch und/oder magnetisch ausgebildet sind, wobei ferner vorzugsweise die Verbindungsmittel derart ausgebildet sind, daß die Formplatten formschlüssig einschiebbar sind.

19. Vorrichtung nach einem der vorhergehenden Ansprüche 17 und 18, wobei die Ziehstation (3; 130) eine Heizeinrichtung zur Beheizung der Formplatten (6, 7; 140, 142), vorzugsweise beheizbar ausgebildete Pressenplatten aufweist, wobei die Heizeinrichtung insbesondere elektrisch ausgebildet ist.

20. Vorrichtung nach einem der vorhergehenden Ansprüche 17 bis 19, wobei die Heizstation (2; 126) eine Mehrzahl von Wärmequellen, die nacheinander entlang der Förderstrecke der Fördereinrichtung (122) angeordnet sind, und/oder eine langgestreckte Wärmequelle aufweist, die sich entlang der Förderstrecke der Fördereinrichtung erstreckt.

21. Vorrichtung nach einem der vorhergehenden Ansprüche 17 bis 20, wobei die Heizstation (2; 126) einen Wärmespeicher (136), insbesondere ein die Wärmequelle und die Förderstrecke der Fördereinrichtung (122) umschließendes, wärmedämmendes Gehäuse, besitzt.

22. Vorrichtung nach einem der vorhergehenden Ansprüche 17-21, wobei eine Wärmeabfuhreinrichtung zur Abfuhr von Wärme aus der Ziehstation (130) und/oder der Kühlstation (134) zu der Heizstation (126) vorgesehen ist.

23. Vorrichtung nach einem der vorhergehenden Ansprüche 17-22, wobei die Fördereinrichtung einen geschlossenen, ringförmigen Förderweg besitzt.

## Claims

1. Method for the continuous manufacturing of panels from thermoplastics stretched in the thickness direction, at least one drawing assembly, comprising an upper and lower mould plate (6, 7; 140, 142) and a panel (5; 148) of a thermoplastic material lying in between, being heated in a dedicated heating station (2; 126) to the extent that the thermoplastic panel material adheres to the mould plates, subsequently stretched in a dedicated drawing station (3; 130) and then cooled to the temperature for the stretched panel material to be demoulded from the mould plates.

2. Method according to Claim 1, the fixing of the upper and lower mould plates (6, 7; 140, 142) on the upper and lower parts of a drawing press (3; 130) in the drawing station (3; 130) taking place by means of mechanical, pneumatic and/or magnetic devices (135).

3. Method according to Claim 1 or 2, the drawing assembly being heated in the heating station to a temperature approximately between 50 and 300°C, preferably 100°C to 250°C.

4. Method according to one of Claims 1 to 3, the mould plates (6, 7; 140, 142) fixed to the upper and lower parts of the press being moved in the drawing station in the thickness direction, so that, as a result, the thermoplastic panel material is stretched in the thickness direction between the mould plates (5; 138).

5. Method according to one of Claims 1 to 4, the expanded panel material being cooled down to a temperature between 10 and 30°C.

6. Method according to one of Claims 1 to 5, the expanded panel material being cooled down in the drawing station (3).

7. Method according to one of Claims 1 to 6, the cooling of the mould plates and of the drawing assemblies taking place in a dedicated cooling station (134).

8. Method according to one of Claims 1 to 7, the cel l structure of the stretched thermoplastic panel being achieved by means of the size and shape of perforations (156) of the upper and/or lower mould plate (140, 142).

9. Method according to one of Claims 1 to 8, a non-perforated mould plate being used on one side and, as a result, a surface that is closed on one side being drawn on the stretched thermoplastic panel.

10. Method according to one of Claims 1 to 9, mould plates (6, 7; 140, 142) made of aluminium or steel being used.

11. Method according to one of Claims 1 to 10, the thermoplastic panel with mould plates of a thickness of about 3 to 30 mm being formed into the drawing assembly.

12. Method according to one of the preceding claims, the drawing assembly being joined together in a dedicated assembly station before the heating in the heating station (2; 126).

13. Method according to one of the preceding claims, the thermoplastic panel being stretched in the drawing station (3; 130) in such a way that a multiplicity of cells which are separated from one another by cell walls are formed, the cells preferably being aerated in order to compensate for the pressure in the cells.

14. Method according to one of the preceding claims, the drawing assembly being heated in the heating station (2; 126) for approximately 30 to 60 seconds, preferably approximately 40 seconds.

15. Method according to one of the preceding claims, a heat storage in the heating station (126) and/or a heat transfer from the cooling station (134) and/or the drawing station (130) to the heating station (126) being accomplished.

16. Method according to one of the preceding claims, the at least one drawing assembly being moved virtually continuously from station to station, in particular a plurality of drawing assemblies being moved one after the other from station to station.

17. Apparatus for the continuous manufacturing of panels from thermoplastics stretched in the thickness direction, with a heating station (2; 126) for heating at least one drawing assembly comprising an upper and lower mould plate (6, 7; 140, 142) and a panel (5; 148) of a thermoplastic material lying in between to a temperature such that the thermoplastic panel material adheres to the mould plates, a drawing station (3; 130) for drawing the mould plates apart and stretching the thermoplastic panel material, a cooling station (3; 134) for cooling the at least one drawing assembly to a demoulding temperature, and a conveying device (122, 124) for automatically transporting the at least one drawing assembly from the heating station to the drawing station and to the cooling station.

18. Apparatus according to the preceding Claim 17, the drawing station having a drawing press (3; 130) with releasable connecting means (145) for the releasable fastening of the mould plates (6, 7; 140, 142) of the drawing assemblies, the releasable connecting means preferably being of a mechanical, pneumatic, hydraulic and/or magnetic type, the connecting means furthermore preferably being formed in such a way that the mould plates can be pushed in with a form fit.

19. Apparatus according to one of the preceding Claims 17 and 18, the drawing station (3; 130) having a heating device for heating the mould plates (6, 7; 140, 142), preferably press plates of a heatable type, the heating device in particular being of an electrical type.

20. Apparatus according to one of the preceding Claims 17 to 19, the heating station (2; 126) having a plurality of heat sources, which are arranged one after the other along the conveying line of the conveying device (122), and/or having an elongated heat source which extends along the conveying line of the conveying device.

21. Apparatus according to one of the preceding Claims 17 to 20, the heating station (2; 126) having a heat store (136), in particular a heat-insulating housing enclosing the heat source and the conveying line of the conveying device (122).

22. Apparatus according to one of the preceding Claims 17-21, a heat removing device being provided for removing heat from the drawing station (130) and/or the cooling station (134) to the heating station (126).

23. Apparatus according to one of the preceding Claims 17-22, the conveying device having a closed, annular conveying path.

## Revendications

1. Procédé pour la fabrication en continu de plaques faites en matière thermoplastique étirées dans le sens de l'épaisseur, moyennant quoi au moins un paquet à étirer constitué d'une plaque de moulage supérieure et d'une plaque de moulage inférieure (6, 7; 140, 142) et d'une plaque (5; 148) placée entre elles en matière thermoplastique est réchauffé dans un poste de chauffage propre (2; 126) jusqu'à ce que la plaque en matière thermoplastique adhère aux plaques de moulage, il est ensuite étiré dans un poste d'étirage propre (3; 130) puis refroidi jusqu'à la température de démoulage des plaques de moulage par la plaque en matière plastique étirée.

2. Procédé selon la revendication 1, moyennant quoi la fixation de la plaque de moulage supérieure et de la plaque de moulage inférieure (6, 7; 140, 142) est réalisée à la partie supérieure et à la partie inférieure d'une presse d'étirage (3; 130) dans le poste d'étirage (3; 130) à l'aide de dispositifs mécaniques, pneumatiques et/ou magnétiques (135).

3. Procédé selon la revendication 1 ou 2, moyennant quoi le paquet à étirer est réchauffé dans le poste d'étirage jusqu'à une température comprise entre environ 50° et 300°C, de préférence comprise entre 100°C et 250°C.

4. Procédé selon l'une quelconque des revendications 1 à 3, moyennant quoi la plaque de moulage supérieure et de la plaque de moulage inférieure (6, 7; 140, 142) fixées à la partie supérieure et à la partie inférieure de la presse sont déplacées dans le sens de l'épaisseur, de sorte que, de ce fait, la matière thermoplastique est étirée entre les plaques de moulage (5; 138) dans le sens de l'épaisseur.

5. Procédé selon l'une quelconque des revendications 1 à 4, moyennant quoi la matière plastique expansée est refroidie à une température comprise entre 10°C et 30°C.

6. Procédé selon l'une quelconque des revendications 1 à 5, moyennant quoi la matière plastique expansée est refroidie dans le poste d'étirage (3).

7. Procédé selon l'une quelconque des revendications 1 à 6, moyennant quoi le refroidissement des plaques de moulage ou des paquets à étirer est réalisé dans un poste de refroidissement propre (134).

8. Procédé selon l'une quelconque des revendications 1 à 7, moyennant quoi la structure cellulaire de la plaque en matière thermoplastique étirée est obtenue par l'intermédiaire de la taille et de la configuration de perforations (156) de la plaque de moulage supérieure et/ou inférieure (140, 142).

9. Procédé selon l'une quelconque des revendications 1 à 8, moyennant quoi une plaque de moulage non perforée est utilisée sur un côté et, de ce fait, une surface fermée sur un côté sur la plaque en matière thermoplastique étirée est étirée.

10. Procédé selon l'une quelconque des revendications 1 à 9, moyennant quoi on utilise des plaques de moulage (6, 7; 140, 142) en aluminium ou en acier.

11. Procédé selon l'une quelconque des revendications 1 à 10, moyennant quoi la plaque en matière thermoplastique est moulée en paquet à étirer avec des plaques de moulage ayant une épaisseur comprise entre environ 3 mm et 30 mm.

12. Procédé selon l'une quelconque des revendications précédentes, moyennant quoi le paquet à étirer est assemblé dans un poste d'assemblage propre avant le réchauffage dans le poste de chauffage (2; 126) .

13. Procédé selon l'une quelconque des revendications précédentes, moyennant quoi la plaque en matière thermoplastique est étirée dans le poste d'étirage (3; 130) de telle manière qu'une pluralité de cellules, qui sont séparées les unes des autres par des parois de cellule, est formée, moyennant quoi les cellules sont, de préférence, ventilées pour équilibrer la pression dans les cellules.

14. Procédé selon l'une quelconque des revendications précédentes, moyennant quoi le paquet à étirer est réchauffé dans le poste de chauffage (2; 126) pendant environ 30 à 60 secondes, de préférence pendant environ 40 secondes.

15. Procédé selon l'une quelconque des revendications précédentes, moyennant quoi une accumulation de chaleur est réalisée dans le poste de chauffage (26) et/ou un transfert de chaleur est réalisé entre le poste de refroidissement (134) et/ou le poste d'étirage (130) et le poste de chauffage (126).

16. Procédé selon l'une quelconque des revendications précédentes, moyennant quoi le au moins un paquet à étirer est déplacé quasiment en continu d'un poste à l'autre, en particulier une pluralité de paquets à étirer sont déplacés l'un après l'autre d'un poste à l'autre.

17. Dispositif pour la fabrication en continu de plaques faites en matière thermoplastique étirés dans le sens de l'épaisseur, avec un poste de chauffage (2; 126) pour le réchauffage d'au moins un paquet à étirer constitué d'une plaque de moulage supérieure et d'une plaque de moulage inférieure (6, 7; 140, 142) et d'une plaque (5; 148) placée entre elles en matière thermoplastique jusqu'à une température telle que la matière thermoplastique adhère aux plaques de moulage, un poste d'étirage (3; 130) pour la séparation des plaques de moulage et l'étirage de la matière thermoplastique, un poste de refroidissement (3; 134) pour le refroidissement du au moins un paquet à étirer jusqu'à une température de démoulage, et un dispositif de transport (122, 124) pour le transport automatique du au moins un paquet à étirer entre le poste de chauffage et le poste d'étirage et le poste de refroidissement.

18. Dispositif selon la revendication précédente 17, moyennant quoi le poste d'étirage comporte une presse d'étirage (3; 130) avec des moyens de raccordement détachables (145) pour la fixation détachable des plaques de moulage (6, 7; 140, 142) des paquets à étirer, moyennant quoi les moyens de raccordement détachables sont, de préférence, de conception mécanique, pneumatique, hydraulique et/ou magnétique, moyennant quoi, en outre, les moyens der accordement sont conçus, de préférence, de manière à ce que les plaques de moulage puissent être insérées par engagement positif.

19. Dispositif selon l'une quelconque des revendications précédentes 17 et 18, moyennant quoi le poste d'étirage (3; 130) comporte une installation pour le chauffage des plaques de moulage (6, 7; 140, 142), de préférence des plaques de moulage conçues pour pouvoir être chauffées, moyennant quoi l'installation de chauffage est, en particulier de conception électrique.

20. Dispositif selon l'une quelconque des revendications précédentes 17 à 19, moyennant quoi le poste de chauffage (2; 126) comporte une pluralité de sources de chaleur qui sont disposées les unes derrière les autres le long de la voie de transport du dispositif de transport (122), et/ou une source de chaleur très allongée qui s'étend le long de la voie de transport du dispositif de transport.

21. Dispositif selon l'une quelconque des revendications précédentes 17 à 20, moyennant quoi le poste de chauffage (2; 126) comporte un accumulateur de chaleur (136), en particulier un carter calorifuge entourant la source de chaleur et la voie de transport du dispositif de transport (122).

22. Dispositif selon l'une quelconque des revendications précédentes 17 à 21, moyennant quoi un dispositif d'évacuation de chaleur est prévu pour l'évacuation de la chaleur hors du poste d'étirage (130) et/ou du poste de refroidissement (134) vers le poste de chauffage (126).

23. Dispositif selon l'une quelconque des revendications précédentes 17 à 22, moyennant quoi le dispositif de transport comporte une voie de transport annulaire fermée.
